# EUROPÄISCHE PATENTSCHRIFT

(11) **EP 3 949 815 B1**
(45) Veröffentlichungstag und Bekanntmachung des Hinweises auf die Patenterteilung: **07.12.2022**
(21) Anmeldenummer: 21189183.3
(22) Anmeldetag: 02.08.2021
(51) Int. Cl.: A47J 37/07

(54) **GRILLROSTÜBERDECKUNG**
GRILL COVER
RECOUVREMENT DE GRILLE DE BARBECUE

(30) Priorität: 07.08.2020 DE 202020104579 U
(43) Veröffentlichungstag der Anmeldung: 09.02.2022
(73) Patentinhaber: MOESTA-BBQ GmbH, 32584 Löhne (DE)
(72) Erfinder: Möhle, Alexander, 32584 Löhne (DE)
(74) Vertreter: Brandt & Nern Patentanwälte

(56) Entgegenhaltungen:
- CN-U- 209 951 088
- DE-U1-202017 104 056
- US-A1- 2016 227 965
- US-A1- 2020 054 168

## Beschreibung

### Technisches Umfeld

Die Erfindung betrifft eine Grillrostüberdeckung für die Zubereitung von Pizza mit einer an der Oberseite des Grillrostes parallel beanstandet angeordneten Deckplatte sowie an drei Kantenbereichen der Deckplatte einseitig zum Grillrost vorstehenden Seitenwänden sowie einer vorstehenden Rückwandung, wobei die Deckplatte aus zwei zueinander verschieblichen Deckplattenelementen besteht.

### Stand der Technik

Grillrostüberdeckungen der eingangs geschilderten gattungsgemäßen Art erfreuen sich seit einiger Zeit zunehmender Beliebtheit. Grund dafür ist die Tatsache, dass Grillvorrichtungen zunehmend auch für die Zubereitung von Pizzen genutzt werden. Die Grillrostüberdeckungen werden dabei auf die Oberseite eines Grillrostes aufgesetzt und dienen dazu, die die Wärme zu bündeln, die unterhalb des Grillrostes durch ein Holzkohlefeuer oder einen oder mehrere Gasbrenner erzeugt wird.

Die zu backende Pizza kann dabei direkt auf dem Grillrost oder auf einem speziellen Pizzastein platziert sein.

Die Verwendung der Grillrostüberdeckungen speziell bei mit Gas betriebenen Grillvorrichtungen ist durch die feinfühlige Regulierung der Wärmezufuhr für den Benutzer besonders vorteilhaft.

In der DE 20 2017 104 056.9 ist eine gattungsgemäße Grillrostüberdeckung offenbart, bei der entsprechend einer speziellen Ausbildung des beschriebenen Gebrauchsmustergegenstandes die Deckplatte aus zwei zueinander verschieblichen Deckplattenelementen besteht, so dass die Breite der Grillrostüberdeckung verändert werden kann. Dies hat den Vorteil, dass gegebenenfalls die Wärmeenergie nebeneinander angeordneter Gasbrenner benutzt werden kann, die gemeinsam den unter der Grillrostüberdeckung befindlichen Innenraum beheizen.

Die beschriebene Grillrostüberdeckung hat sich in der Praxis gut bewährt. Dies ist neben der beschriebenen Variabilität der Breite auch darauf zurückzuführen, dass durch die Verwendung hitzebeständiger Materialien in ausreichender Dicke wie beispielsweise Edelstahl hitzebedingter Verzug der Bauteile vermieden wird.

Die die geschilderte hochwertige Bauweise erfordert naturgemäß einen nicht unbeträchtlichen Materialeinsatz und Herstellungsaufwand.

### Aufgabe der Erfindung

Aufgabe der vorliegenden Erfindung ist es daher, eine Grillrostüberdeckung der oben geschilderten gattungsgemäßen Art so weiterzuentwickeln, dass mittels einer neuen konstruktiven Ausbildung eine kostengünstige Herstellung gewährleistet ist. Darüber hinaus sollen selbstverständlich alle Vorteile hinsichtlich Variabilität, Langlebigkeit und Handhabbarkeit gewährleistet sein.

### Lösung der Aufgabe

Die gestellte Aufgabe wird erfindungsgemäß durch die Gesamtmerkmalskombination der im Anspruch 1 dargelegten technischen Lehre gelöst.

Erfindungswesentlich dabei ist es, dass die Deckplattenelemente an ihren jeweiligen der Rückwandung und der gegenüberliegenden Vorderseite der Grillrostüberdeckung zugewandten Seitenrändern eine längliche Aufnahmehalterung für ein plattenförmige Zwischenplatte aufweisen, welches in den Aufnahmehalterungen der Deckplattenelemente verschieblich angeordnet ist, so dass die Breite der Grillrostüberdeckung variabel ist.

Die Zwischenplatte kann als einfaches plattenförmiges zusätzliches Bauelement ohne weitere Bearbeitung aus einem kostengünstigen und hitzebeständigen Material hergestellt sein. Ein derartiges Material ist beispielsweise am Markt als Schamott oder Cordierit verfügbar und wird üblicherweise unter anderem zur Herstellung von Pizzasteinen verwendet. Die Zwischenplatte hat dabei eine Dicke von ca. 15 mm.

Besondere Weiterbildungen des Gegenstandes der Erfindung ergeben sich zusätzlich zu der im Anspruch 1 beschriebenen technischen Lehre aus den Merkmalen der auf den Hauptanspruch rückbezogenen Unteransprüche.

Entsprechend einer vorteilhaften Weiterbildung des Gegenstandes der Erfindung hatte sich als günstig erwiesen, die Aufnahmehalterungen an der Vorder- und Rückseite der Deckelemente nutförmig mit einem U-förmigen Querschnitt auszubilden, wobei die parallel beanstandeten Schenkel des Querschnittes die vorderen und hinteren Randbereiche der Zwischenplattees zwischen sich aufnehmen. Die die vorderen und hinteren Randbereiche sind somit in einer schienenförmigen Konstruktion verschieblich gelagert. Die entsprechende konstruktive Gestaltung lässt sich mit herkömmlichen Produktionsmaschinen kostengünstig herstellen.

Hinsichtlich der Gestaltung der beiden überliegenden Seitenwände und der Rückwandung sieht eine bevorzugte Ausführungsform vor, dass diese mit der Deckplatte ein Winkel von 10 bis 45° zur Vertikalen bilden und an ihren der Deckplatte abgewandten Kantenbereichen eine Standfläche zum sicheren Aufsetzen auf den Grillrost aufweisen.

Zur Kontrolle der Temperatur im Innenraum der Grillrostüberdeckung unterhalb der Deckplatte kann es entsprechend einer vorteilhaften Weiterbildung des Gegenstandes der Erfindung zweckmäßig sein, an der Oberseite der Zwischenplatte eine Temperaturanzeigevorrichtung anzuordnen.

### Figurenbeschreibung

Nachfolgend wird ein Ausführungsbeispiel der erfindungsgemäßen Grillrostüberdeckung anhand der beigefügten Zeichnungen näher erläutert. Es zeigt:
- Figur 1: eine perspektivische Explosionsdarstellung der erfindungsgemäßen Grillrostüberdeckung und
- Figur 2A: eine perspektivische Frontansicht des Gegenstandes der Erfindung im auseinandergefahrenen Zustand der zueinander verschieblichen Deckplattenelemente und
- Figur 2B: eine perspektivische Frontansicht des Gegenstandes der Erfindung im eingefahrenen Zustand der zueinander verschieblichen Deckplattenelemente.

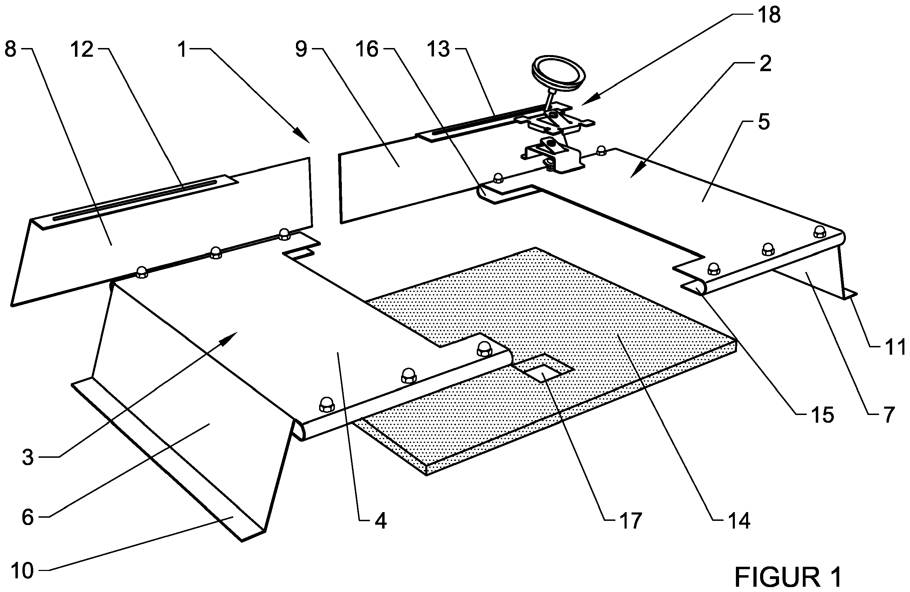

In der Darstellung der Figur 1 sind alle wesentlichen Elemente der erfindungsgemäßen Grillrostüberdeckung so dargestellt, dass deren Funktion und Aufbau klar ersichtlich ist. Zu erkennen ist, dass die insgesamt mit 1 bezeichnete Grillrostüberdeckung zwei nebeneinander angeordnete Deckplattenelemente 2 und 3 aufweist. Die Deckplattenelemente 2 und 3 bestehen jeweils aus einem horizontal, parallel beanstandet zu einem Grillrost angeordneten Abschirmblech 4 und 5, einer an einer Schmalseite des jeweiligen abschirmte 4 oder 5 nach unten in Richtung des Grillroste vorstehenden Seitenwand 6 bzw. 7 und einem Rückwandelement 8 bzw. 9. Die jeweilige Seitenwand 6, 7 ist mit dem zugehörigen Abschirmblech 4 bzw. 5 einstückig aus Edelstahl gefertigt.

An ihrer den jeweiligen Abschirmblechen 4, 5 parallel gegenüberliegenden Kante jede Seitenwand 6, 7 mit einem parallel zu den Abschirmblech in 4, 5 horizontal ausgerichteten Standflächenelementen 10 und 11 versehen, die zum sicheren Aufsetzen auf dem Grillrost einer Grillvorrichtung dienen.

Die Rückwandelemente 8 und 9 sind mit den jeweiligen Abschirmblechen 4 und 5 mittels eines Langloches 12, 13 verschraubt. Die Rückwandelemente 8 und 9 stehen analog den Seitenwänden 6, 7 gegenüber den Abschirmblech in 4, 5 nach unten in Richtung des nicht dargestellten Grillrostes vor. Sowohl die Rückwand Elemente 7 und 8 als auch die Seitenwände 6 und 7 bilden dabei gegenüber den Abschirmblech in 4 und 5 einen Winkel etwas größer als 90° nach außen vorstehend, so dass die Grundrissfläche der Grillrostüberdeckung 1 an ihrer unteren, auf dem Grill aufstehenden Seite etwas größer bemessen ist als die Fläche der Abschirmbleche 4 und 5.

I. N der Figur 1 ist darüber hinaus gut zu erkennen, dass die Abschirmblech 4 und 5 an ihrer jeweiligen Vorder- und Rückseite eine längliche Aufnahmehalterung 15 und 16 für eine flache Zwischenplatte 14 aufweisen. Die Aufnahmehalterungen 15 und 16 sind nutförmig mit einem U-förmigen Querschnitt ausgebildet, wobei die parallel beanstandeten Schenkel des Querschnittes die vorderen und hinteren Randbereiche der Zwischenplatte 14 aufnehmen. Die beschriebene konstruktive Gestaltung diente dazu, dass die Zwischenplatte 14 zusammen mit den Deckplattenelementen 2 und 3 eine Verbreiterung oder Verschmälerung der Grillrostüberdeckung ermöglichen.

Durch die Breitenveränderung ist die Möglichkeit gegeben, zum einen bei einem Gasgrill mehrere Gasbrenner durch eine Grillrostüberdeckung 1 abzuschirmen, so dass die durch die Gasbrenner produzierte Wärmeenergie innerhalb des Innenraumes der Grillrostüberdeckung 1 gebündelt werden kann. Gleichzeitig ist natürlich die Möglichkeit eröffnet, zwei Pizzen nebeneinander gleichzeitig zuzubereiten.

Die Zwischenplatte 14 besteht aus einem Material, welches auch für die Herstellung von Pizzasteinen verwendet wird, eine gute Wärmeaufnahme Kapazität aufweist und in der jeweiligen Flächengröße ein gutes Preis-Leistungs-Verhältnis besitzt.

In der Zwischenplatte 14 ist, wie dies aus der Figur 1 hervorgeht, eine Aussparung 17 eingebracht in die eine Temperaturanzeige Vorrichtung 18 eingesetzt werden kann.

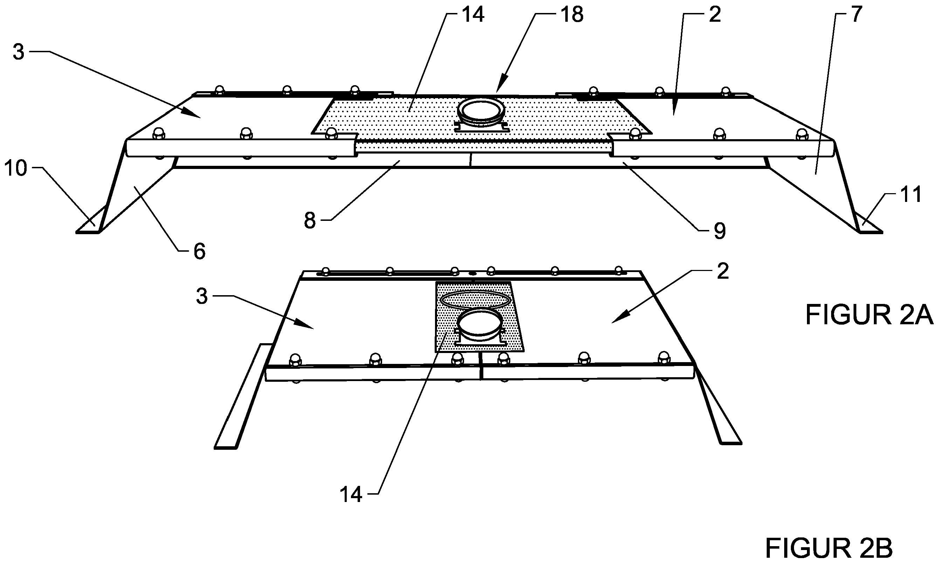

Aus der Darstellung der Figur 2a und 2B wird deutlich, dass die erfindungsgemäße Grillrostüberdeckung auf einfache Weise durch Zusammen schieben der beiden Deckplattenelemente 2 und 3 eine platzsparende Form einnehmen kann, die zum einen der problemlosen Aufbewahrung bei Nichtgebrauch dient, aber auch in der schmalen eingeschobenen Variante noch der Zubereitung einer einzelnen Pizza dienen kann.

### Bezugszeichenliste

- 1: Grillrostüberdeckung
- 2: Deckplattenelement
- 3: Deckplattenelement
- 4: Abschirmblech
- 5: Abschirmblech
- 6: Seitenwand
- 7: Seitenwand
- 8: Rückwandelement
- 9: Rückwandelement
- 10: Standflächenelement
- 11: Standflächenelement
- 12: Langloch
- 13: Langloch
- 14: Zwischenplatte
- 15: Aufnahmehalterung
- 16: Aufnahmehalterung
- 17: Aussparung
- 18: Temperaturanzeigevorrichtung

## Patentansprüche

1. Grillrostüberdeckung für die Zubereitung von Pizza mit einer an der Oberseite des Grillrostes parallel beanstandet angeordneten Deckplatte sowie an drei Kantenbereichen der Deckplatte einseitig zum Grillrost vorstehenden Seitenwänden sowie einer vorstehenden Rückwandung, wobei die Deckplatte aus zwei zueinander verschieblichen Deckplattenelementen besteht,
**dadurch gekennzeichnet, dass**
die Deckplattenelemente (2, 3) an ihren jeweiligen der Rückwandung (8, 9) und der gegenüberliegenden Vorderseite der Grillrostüberdeckung zugewandten Seitenrändern eine längliche Aufnahmehalterung (15, 16) für eine plattenförmige Zwischenplatte (14) aufweisen, welches in den Aufnahmehalterungen (15, 16) der Deckplattenelemente (2, 3) verschieblich angeordnet ist, so dass die Breite der Grillrostüberdeckung variabel ist.

2. Grillrostüberdeckung nach Anspruch 1,
**dadurch gekennzeichnet, dass**
die Zwischenplatte (14) im Grundriss rechteckförmig ausgebildet ist.

3. Grillrostüberdeckung nach Anspruch 1 oder 2,
**dadurch gekennzeichnet, dass**
die Aufnahmehalterungen (15, 16) an der Vorder- und Rückseite der Deckplattenelemente (2, 3) nutförmig mit einem U-förmigen Querschnitt ausgebildet sind, wobei die parallel beanstandeten Schenkel des Querschnittes die vorderen und hinteren Randbereiche der Zwischenplatte (14) zwischen sich aufnehmen.

4. Grillrostüberdeckung nach einem oder mehreren der Ansprüche 1 bis 3,
**dadurch gekennzeichnet, dass**
die Zwischenplatte (14) aus Pizzasteinmaterial gefertigt ist.

5. Grillrostüberdeckung nach einem oder mehreren der Ansprüche 1 bis 4,
**dadurch gekennzeichnet, dass**
die zwei gegenüberliegenden Seitenwände (5, 6) und die Rückwandung (8, 9) mit den horizontal angeordneten Teilen Deckplattenelemente (2, 3) einen Winkel von 10 bis 45° zur Vertikalen bilden und an ihren unteren Kantenbereichen jeweils ein Standflächenelement (10, 11) aufweisen.

6. Grillrostüberdeckung nach einem oder mehreren der Ansprüche 1 bis 5,
**dadurch gekennzeichnet, dass**
an der Oberseite der Zwischenplatte (14) eine Temperaturanzeigevorrichtung (18) angeordnet ist, die die Temperatur im Innenraum der Grillrostüberdeckung unterhalb der Zwischenplatte (14) anzeigt.

## Claims

1. Grill grate covering for preparing pizza, having a cover plate arranged with parallel spacing on the upper side of the grill grate, as well as side walls protruding towards the grill grate on one side, in three edge areas of the cover plate, as well as a protruding back wall, wherein the cover plate consists of two cover plate elements that can be moved relative to each other,
**characterised in that**
the cover plate elements (2, 3) have an elongated holder (15, 16) for a panel-shaped intermediate plate (14) on their respective side edges that face the back wall and the opposite front side of the grill grate covering, which is moveably arranged in the holders (15, 16) of the cover plate elements (2, 3), so that the width of the grill grate covering is variable.

2. Grill grate covering according to claim 1,
**characterised in that**
the intermediate plate (14) is formed with a rectangular outline.

3. Grill grate covering according to claim 1 or 2,
**characterised in that**
the holders (15, 16) are formed in a groove shape with a U-shaped cross section on the front and back sides of the cover plate elements (2, 3), wherein the parallel spaced flanges of the cross-section accommodate the front and back edge areas of the intermediate plate (14) between them.

4. Grill grate covering according to one or more of claims 1 to 3,
**characterised in that**
the intermediate plate (14) is made from pizza stone material.

5. Grill grate covering according to one or more of claims 1 to 4,
**characterised in that**
the two opposite side walls (5, 6) and the back wall (8, 9) with the horizontally arranged cover plate element parts (2, 3) form an angle of 10 to 45° to the vertical and each have a standing surface element (10, 11) on their lower edge areas.

6. Grill grate covering according to one or more of claims 1 to 5,
**characterised in that**
a temperature display device (18) is arranged on the upper side of the intermediate plate (14), which displays the temperature in the interior of the grill grate covering under the intermediate plate (14).

## Revendications

1. Recouvrement de grille de barbecue pour la préparation de pizza avec une plaque de recouvrement agencée à distance parallèlement au niveau du côté supérieur de la grille de barbecue ainsi que des parois latérales dépassant au niveau de trois zones d'arête de la plaque de recouvrement d'un côté de la grille de barbecue ainsi qu'une paroi arrière qui dépasse, dans lequel la plaque de recouvrement se compose de deux éléments de plaque de recouvrement coulissants l'un par rapport à l'autre,
**caractérisé en ce que**
les éléments de plaque de recouvrement (2, 3) présentent au niveau de leurs bords latéraux respectifs tournés vers la paroi arrière (8, 9) et le côté avant opposé du recouvrement de grille de barbecue un support de réception (15, 16) oblong pour une plaque intermédiaire (14) en forme de plaque qui est agencée de manière coulissante dans les supports de réception (15, 16) des éléments de plaque de recouvrement (2, 3) de sorte que la largeur du recouvrement de grille de barbecue soit variable.

2. Recouvrement de grille de barbecue selon la revendication 1,
**caractérisé en ce que**
la plaque intermédiaire (14) est réalisée en projection horizontale en forme de rectangle.

3. Recouvrement de grille de barbecue selon la revendication 1 ou 2,
**caractérisé en ce que**
les supports de réception (15, 16) sont réalisés au niveau du côté avant et arrière des éléments de plaque de recouvrement (2, 3) en forme de rainure avec une section transversale en forme de U, dans lequel les branches espacées parallèlement de la section transversale reçoivent entre elles les zones de bord avant et arrière de la plaque intermédiaire (14).

4. Recouvrement de grille de barbecue selon l'une ou plusieurs quelconques des revendications 1 à 3,
**caractérisé en ce que**
la plaque intermédiaire (14) est fabriquée en matériau de pierre à pizza.

5. Recouvrement de grille de barbecue selon l'une ou plusieurs quelconques des revendications 1 à 4,
**caractérisé en ce que**
les deux parois latérales (5, 6) opposées et la paroi arrière (8, 9) forment avec les parties agencées horizontalement des éléments de plaque de recouvrement (2, 3) un angle de 10 à 45° par rapport à la verticale et présentent au niveau de leurs zones d'arête inférieures respectivement un élément de surface d'appui (10, 11).

6. Recouvrement de grille de barbecue selon l'une ou plusieurs quelconques des revendications 1 à 5,
**caractérisé en ce que**
un dispositif d'affichage de température (18) est agencé au niveau du côté supérieur de la plaque intermédiaire (14), lequel affiche la température dans l'espace intérieur du recouvrement de grille de barbecue en dessous de la plaque intermédiaire (14).
